(19) Europäisches Patentamt
European Patent Office
Office européen des brevets

(11) **EP 2 792 401 B1**

(12) **FASCICULE DE BREVET EUROPEEN**

(45) Date de publication et mention
de la délivrance du brevet:
**22.03.2017 Bulletin 2017/12**

(51) Int Cl.:
*F23J 15/02* [(2006.01)]   *F23J 15/06* [(2006.01)]
*B01D 53/86* [(2006.01)]

(21) Numéro de dépôt: **14164756.0**

(22) Date de dépôt: **15.04.2014**

(54) **Procédé de contrôle d'un réacteur de dénitrification catalytique de fumées**

Kontrollverfahren eines Reaktors mit katalytischer Denitrifikation der Verbrennungsabgase

Method for controlling a reactor for catalytic denitrification of fumes

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2013 FR 1353435**

(43) Date de publication de la demande:
**22.10.2014 Bulletin 2014/43**

(73) Titulaire: **LAB SA**
**69007 Lyon (FR)**

(72) Inventeurs:
• **SIRET, Bernard**
  **69200 VENISSIEUX (FR)**
• **TABARIES, Franck**
  **83430 Saint Mandrier sur Mer (FR)**

(74) Mandataire: **Lavoix**
**62, rue de Bonnel**
**69448 Lyon Cedex 03 (FR)**

(56) Documents cités:
**EP-A1- 2 301 649    US-B1- 7 824 636**

EP 2 792 401 B1

**Description**

La présente invention concerne un procédé de contrôle d'un réacteur de dénitrification catalytique de fumées. Autrement dit, l'invention a trait à la gestion des conditions opératoires d'un tel réacteur.

Un tel procédé est connu du document US7824636B, qui décrit en combinaison les caractéristiques du préambule de la revendication 1.

La combustion de combustibles fossiles, comme le charbon ou le fuel, ou bien l'incinération de déchets génère des polluants acides, en particulier de l'acide chlorhydrique et du dioxyde de soufre, ainsi que des oxydes d'azote, qu'il faut retirer des fumées de combustion avant le rejet à l'atmosphère.

Pour ce qui concerne les oxydes d'azote, plusieurs technologies sont disponibles et bien acceptées industriellement. Une première solution consiste à agir au niveau de la combustion proprement dite. Des brûleurs, dit « bas NOx », peuvent être utilisés dans le cas de la combustion du charbon ou du fuel, ou bien l'excès d'air ou son étagement peuvent être modifiés, de façon que, dans les zones très chaudes, la formation des oxydes d'azote à partir de l'azote de l'air soit minimisée. Il a été également proposé d'enrichir l'atmosphère de combustion en oxygène ou de recycler du dioxyde de carbone pour accomplir cet effet. Cette première approche est limitée dans son efficacité et se révèle de plus peu commode à mettre en oeuvre dans le cas de l'incinération des déchets. De surcroît, cette solution ne peut aucunement suffire à amener d'une manière générale la teneur en oxydes d'azote dans les fumées de combustion en deçà de 80 mg/Nm$^3$.

Une seconde approche consiste à injecter un réactif, usuellement de l'ammoniac ou de l'urée, dans une zone particulière de la combustion. Ce réactif se décompose alors et les radicaux générés réagissent pour empêcher la formation des oxydes d'azote ou détruire ceux déjà formés. Là encore, cette solution connaît des limites : il est difficile d'obtenir un rendement de destruction de plus de 70%, sauf à consentir une fuite d'ammoniac dépassant la dizaine de mg/Nm$^3$. De surcroît, pour le cas particulier de l'incinération des déchets, on ne peut pas obtenir beaucoup mieux que 120 mg/Nm$^3$ pour la teneur en oxydes d'azote dans les fumées, sans avoir une fuite d'ammoniac importante. Cette solution, dite SNCR (anagramme pour « selective non catalytic reduction »), n'est donc pas suffisante pour répondre aux besoins des unités modernes.

Aussi, la technique généralement utilisée quand on a besoin d'obtenir des teneurs d'oxydes d'azote inférieures à 80 mg/Nm$^3$, consiste à recourir à l'utilisation d'un catalyseur de dénitrification : on parle alors d'une solution dite SCR (anagramme de « selective cataclytic reduction »). Plus précisément, on fait réagir les oxydes d'azote avec un réactif approprié sur un catalyseur spécifique, maintenu à une température relativement élevée. Le réactif employé est typiquement l'ammoniac ou l'urée. Ainsi, à titre d'exemple, US-B-7 824 636, qui peut être considéré comme l'état de la technique le plus proche de l'invention telle que définie à la revendication 1 annexée, divulgue un procédé de dénitrification par voie catalytique, dans lequel les conditions opératoires du réacteur catalytique sont gérées en fonction de divers paramètres, incluant la température des fumées à dénitrifier, ainsi que le type et « l'ancienneté » du catalyseur de ce réacteur.

Si cette technique de dénitrification catalytique est maintenant bien maîtrisée, on doit opérer malgré tout à une température relativement élevée pour plusieurs raisons. D'abord, des poisons ou des sels peuvent se déposer sur le catalyseur, en surface ou dans ses pores, et conduire à une perte rapide de son activité. D'autre part, une activité suffisante doit être obtenue et, dans la mesure où la réaction de destruction des oxydes d'azote est une réaction chimique, elle est d'autant plus rapide qu'une température élevée est maintenue sur le catalyseur. On peut certes compenser une baisse d'activité liée à une température d'opération basse, par une augmentation du volume du catalyseur, mais ceci se fait au détriment de l'économie du procédé. Cela est vrai en particulier pour les catalyseurs de SCR les plus utilisés, à base d'oxydes de vanadium $V_2O_5$, qui ne sont guère utilisés à des températures inférieures à 180°C, car leur activité chute alors par trop.

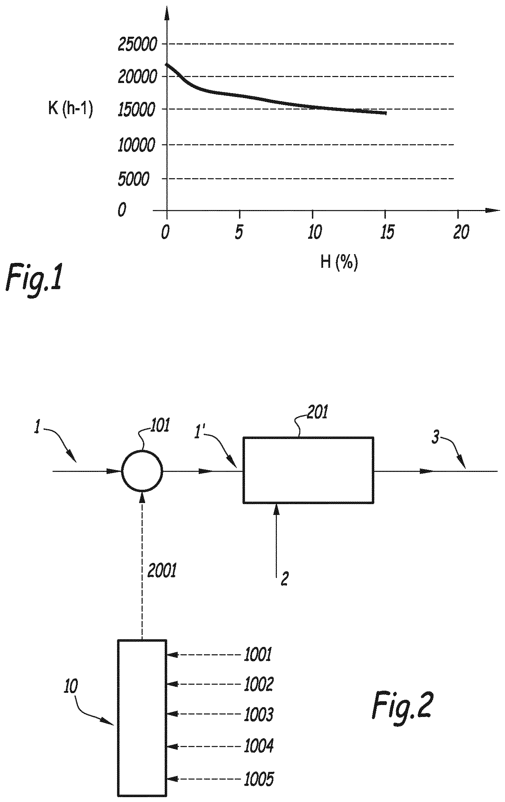

Par ailleurs, tous les catalyseurs de dénitrification catalytique sont sensibles à la vapeur d'eau, leur activité diminuant avec la teneur en eau. Willi et Roduit (Chemical Engineering Science, volume 51, numéro 11, pages 2897-2902) ont quantifié ce phénomène pour le catalyseur classique à base de vanadium. Ainsi, à titre d'illustration, la figure 1 montre un exemple de variation de l'activité d'un catalyseur, à base d'oxydes de vanadium $V_2O_5$, opérant à 220°C, en fonction de l'humidité.

Dans ce contexte, d'autres types de catalyseurs, plus actifs à basse température, ont été proposés et de nombreuses recherches sont actuellement actives en la matière. Par exemple, des catalyseurs dont le principe actif est basé sur du fer, du cuivre et du manganèse sont proposés. Toutefois, ces catalyseurs supportent en général assez mal l'eau contenue sous forme vapeur dans les fumées, eau qui est typiquement produite par la combustion, et l'activité spécifique de ces catalyseurs, à une température donnée, chute fortement avec l'humidité.

On comprend donc qu'un compromis doit être trouvé entre, d'un côté, la nécessité d'opérer de manière sûre pour le procédé à une température suffisante et, d'un autre côté, la recherche de maximiser la récupération énergétique, autrement dit d'opérer à la température la plus faible possible. Par ailleurs, il existe une autre motivation à opérer à basse température, qu'on entend ici comme inférieure à 200°C : c'est de pouvoir placer le réacteur catalytique immédiatement en aval d'un filtre à manches, sans avoir à placer de coûteux échangeurs récupérateurs de chaleur, qui n'ont pour fonction que de permettre, localement, aux réacteurs de dénitrification d'opérer à une température bien supérieure à celle d'un filtre à manches.

Ceci étant rappelé, le but de la présente invention est de proposer un procédé de contrôle d'un réacteur de dénitrification catalytique, permettant d'optimiser l'activité du catalyseur de ce réacteur à la température la plus basse possible.

A cet effet, l'invention a pour objet un procédé de contrôle d'un réacteur de dénitrification catalytique de fumées, tel que défini à la revendication 1.

Pour bien comprendre l'invention, on rappelle que, de manière connue, l'activité d'un catalyseur dépend, outre les caractéristiques du catalyseur lui-même, de la température et de l'humidité. La variation d'activité du catalyseur dépend du type de ce dernier et de l'humidité, cette variation étant d'autant plus importante que la température est basse. Le mécanisme est probablement une compétition entre l'eau et l'ammoniac. Il est par ailleurs admis que, de manière suffisante pour les besoins de l'industrie de traitement des fumées de combustion, la cinétique est de premier ordre vis-à-vis des oxydes d'azote : pour un débit Q de fumées, exprimé en $m^3$ réels par heure ou en toute autre unité, l'activité d'un catalyseur peut être approximée par l'équation $K = Q/V*Ln(NOxi/NOxo)$ où K est l'activité, V est le volume du catalyseur, et NOxi et NOxo désignent les concentrations en oxydes d'azote respectivement en amont et en aval du catalyseur. Dans l'état de l'art, le catalyseur opère normalement une température fixée, ou bien cette température est pilotée en fonction de la teneur en certains polluants, par exemple les oxydes de soufre, de façon à se placer dans des conditions d'opération du catalyseur qui soient sûres vis-à-vis des poisons et des sels pouvant se déposer sur le catalyseur. En général, cela conduit à des conditions globales de fonctionnement qui offrent une marge très importante par rapport à ce que peut réellement réaliser le catalyseur en termes de dénitrification. Aussi, puisque le volume du catalyseur utilisé a été prévu de façon à pouvoir faire face à toutes les situations pouvant se présenter, et que ce volume tient compte d'une réserve pour la désactivation progressive et inéluctable du catalyseur, on comprend qu'il est possible d'opérer à une température moindre, permettant ainsi de réaliser une récupération d'énergie plus poussée. De plus, dans un procédé industriel, il est fréquent que les fumées à traiter soient soumises à des fluctuations de débit et à des variations de leur teneur en humidité.

Grâce au procédé conforme à l'invention, tel que défini plus haut, on optimise en permanence, c'est-à-dire, en pratique, de manière régulière dans le temps, les conditions d'opération du réacteur de dénitrification catalytique, en ajustant en permanence la température d'opération de ce réacteur en fonction de la teneur en humidité des fumées, qui est mesurée en permanence, et du besoin réel en dénitrification des fumées à traiter, qui est au moins lié à la concentration cible qu'on se fixe pour la teneur en oxydes d'azote en aval du réacteur de dénitrification catalytique. Grâce à l'invention, on maximise à tout moment la récupération énergétique globale du traitement des fumées.

Des caractéristiques additionnelles avantageuses du procédé conforme à l'invention sont spécifiées aux revendications dépendantes.

L'invention sera mieux comprise à la lecture de la description qui va suivre, donnée uniquement à titre d'exemple et faite en se référant aux dessins sur lesquels :

- la figure 1 est une courbe de variation de l'activité d'un catalyseur en fonction de l'humidité ; et
- la figure 2 est une vue schématique d'une installation de traitement de fumées, mettant en oeuvre un procédé conforme à l'invention.

Sur la figure 2, des fumées à traiter 1, provenant par exemple d'une installation de combustion, traversent au moins partiellement un dispositif 101 conçu pour refroidir ces fumées, puis entrent, sous forme d'un flux de fumées 1' sortant du dispositif 101, dans un réacteur de dénitrification catalytique 201.

Le dispositif de refroidissement 101 permet, selon l'invention, de faire varier la température du flux de fumées 1', comparativement à la température des fumées 1. Ce dispositif 101 doit être considéré comme un ensemble et peut être constitué, par exemple, d'un échangeur de chaleur, avec ces vannes de régulation et un by-pass, et non pas comme une simple unité. Ainsi, pour l'invention, le dispositif 101 permet d'obtenir, à partir des fumées 1 qui y entrent, les fumées 1' ayant une température réglable, qui est inférieure à celle des fumées 1. D'une manière plus globale, le dispositif 101 sert également à la récupération d'énergie provenant du refroidissement des fumées traversant ce dispositif, comme expliqué par la suite.

Selon l'invention, le réacteur de dénitrification catalytique 201 reçoit les fumées 1', ainsi qu'un réactif de dénitrification 2. Ce réactif 2 de dénitrification est par exemple constitué d'ammoniac, d'une solution ammoniacale ou d'une solution d'urée.

Selon une autre caractéristique de l'invention, on détermine un besoin B en dénitrification des fumées 1' à partir d'informations disponibles en permanence, à savoir une information 1001 relative à la valeur du débit des fumées 1', une information 1002 relative à la valeur de la concentration en oxydes d'azote dans les fumées 1' en amont du réacteur 201, et une information 1003 relative à la valeur cible de la concentration en oxydes d'azote dans les fumées

3 en aval du réacteur 201. Ce besoin en dénitrification B correspond à une quantification de la difficulté pour le catalyseur du réacteur 201 à accomplir la tâche de dénitrification qui lui est demandée, en lien avec la valeur cible de l'information 1003, qui est choisie par l'opérateur et qui est, par exemple, un point de consigne pour des régulateurs.

En pratique, de nombreuses formules mathématiques peuvent être employées pour calculer le besoin B. A titre d'exemple, l'une d'entre elles est $B = Q \times Ln(NOxi/ NOxo)$ où Q est le débit de fumées, par exemple en $m^3/h$, NOxi est la concentration en oxydes d'azote en amont du catalyseur, et NOxo est la cible de concentration en oxydes d'azote en aval du catalyseur. Aussi, dans cet exemple, une valeur de Q est apportée par l'information 1001, une valeur de NOxi est fournie par l'information 1002, et une valeur de NOxo est fournie par l'information 1003. Sur la figure 2, les informations 1001, 1002 et 1003 sont ainsi représentées comme étant fournies à un calculateur 10 dans lequel est implémentée la formule ci-dessus.

Plus généralement, le besoin en dénitrification B n'est pas, ici, une mesure ou une estimation d'un flux de polluants à abattre, mais doit être considéré comme une quantification de la difficulté du travail à accomplir par le catalyseur du réacteur 201 pour dénitrifier les fumées 1', pondérée par le débit de ces fumées à traiter. A titre de variante, d'autres formules, plus complexes, peuvent être envisagées, faisant intervenir d'autres paramètres, comme, par exemple, la composition des fumées 3 en aval du catalyseur.

Il est à noter que, d'une manière ou d'une autre, l'information 1001 relative à la valeur du débit des fumées traitées par le réacteur 201, est connue en permanence, par exemple par une mesure directe.

L'information 1002 relative à la valeur de la concentration en oxydes d'azote dans les fumées en amont du réacteur 201 peut être obtenue soit par une mesure directe, réalisée par un analyseur en ligne, situé en amont du réacteur 201, soit par une estimation calculée, déterminée à partir d'informations disponibles pertinentes.

Ainsi, selon un premier mode de réalisation conforme à l'invention, l'information 1002 est donnée directement par une mesure de la concentration en oxydes d'azote dans les fumées 1'.

Selon un second mode de réalisation conforme à l'invention, l'information 1002 est calculée, par le calculateur 10 ou un autre calculateur, à partir de :

- la valeur connue du débit des fumées, autrement l'information 1001,
- la valeur connue du débit du réactif de dénitrification 2, étant remarqué que cette valeur peur être par exemple fournie par une mesure directe de ce débit, ou bien par le signal donné à un organe de contrôle de ce débit, tel qu'une vanne, une pompe, etc., et
- la valeur mesurée de la concentration en oxydes d'azote dans les fumées 3 en aval du réacteur 201, étant souligné que cette concentration mesurée ne doit pas être confondue avec la concentration cible correspondant à l'information 1003 présentée plus haut.

En effet, les réactions conduisant à la dénitrification des fumées sont connues et une quantité connue du réactif de dénitrification 2 détruit une quantité connue d'oxydes d'azote selon une stoechiométrie connue. Par exemple, quand on utilise de l'ammoniac comme réactif réducteur 2, pour des fumées issues de l'incinération, 1 à 1,1 moles d'ammoniac détruisent 1 mole d'oxydes d'azote. En connaissant le débit du réactif de dénitrification 2, la concentration d'oxydes d'azote en aval du catalyseur et le débit des fumées, on peut calculer par bilan la concentration en oxydes d'azote en amont du catalyseur. A titre d'exemple, dans le cas d'une stoechiosmétrie de 1 : 1, c'est-à-dire qu'une mole d'ammoniac détruit une mole d'oxydes d'azote, la formule ci-après peut être appliquée : $NOxi = NOxo + Q' \times (46 \times 1000000)/ (Q \times 17))$ où 46 représente la masse molaire des oxydes d'azote sous forme $NO_2$, 17 représente la masse molaire de l'ammoniac, Q représente le débit des fumées 1', souvent exprimé pour ce calcul en $Nm^3/heure$, et Q' représente la quantité d'ammoniac 2 introduite en kg/heure. Les concentrations NOxo et NOxi sont ici exprimées en $mg/Nm^3$. Bien entendu, d'autres choix d'unité sont possibles, sans que cela limite de quelque façon que ce soit l'invention.

Un exemple d'un tel calcul de l'information 1002 sera donné plus loin, dans le cadre de la description d'un exemple de mise en oeuvre de l'invention.

A partir de la valeur calculée du besoin en dénitrification B, ainsi que du volume du catalyseur du réacteur 201, on calcule une activité requise K pour ce catalyseur. Cette activité requise K peut être calculée en divisant le besoin en dénitrification B par le volume V du catalyseur. Sur la figure 2, l'information 1004 relative à la valeur du volume V est représentée comme étant fournie au calculateur 10, étant entendu que cette valeur est connue puisque le volume V est préfixé.

Selon une autre caractéristique de l'invention, on calcule ensuite, en pratique par l'intermédiaire du calculateur 10, la valeur d'une température de consigne T à partir de la valeur calculée de l'activité requise K et de la valeur mesurée de la teneur en humidité H des fumées. Sur la figure 2, l'information relative à la valeur mesurée de l'humidité est référencée 1005. En pratique, la relation liant l'activité effective du catalyseur présent dans le réacteur 201 à la température et l'humidité peut être disponible sous forme de tables, d'abaques ou d'équations, de manière non limitative. Il suffit que cette relation permette, connaissant la valeur de l'activité requise K et la valeur mesurée de l'humidité, de déterminer, immédiatement ou par itérations, une valeur de température correspondante, constituant la valeur de la température de consigne. Cette relation peut être connue par la littérature, ou bien déterminée empiriquement, par l'expérimentation.

En pratique, il est à noter que la mesure d'humidité correspondant à l'information 1005 peut être réalisée, indifféremment, en amont ou en aval du réacteur 201.

Selon une autre caractéristique de l'invention, la température de consigne T est utilisée pour piloter le dispositif de refroidissement 101, dans le sens où la valeur de cette température de consigne est appliquée au dispositif 101 pour régler son action de refroidissement sur les fumées le traversant. Sur la figure 2, l'information correspondante de pilotage du dispositif 101 est référencée 2001.

Ainsi, plus globalement, le dispositif 101 abaisse la température des fumées le traversant, en la faisant passer d'une valeur initiale pour les fumées 1 à une valeur finale, sensiblement égale à la valeur calculée de la température de consigne T, pour les fumées 1'. La chaleur cédée par les fumées ainsi refroidies est avantageusement récupérée par le dispositif 101 pour produire de la chaleur, par exemple sous forme d'eau chaude ou de vapeur, sans que cette disposition soit objet de l'invention.

En pratique, afin de rester dans des limites sûres pour le procédé et les équipements, la température de consigne T est encadrée entre une borne inférieure et une borne supérieure. La borne inférieure est typiquement comprise entre 130°C et 180°C, tandis que la borne supérieure est typiquement comprise entre 180°C et 260°C.

EXEMPLE

Le cas suivant est donné à titre d'exemple seulement, pour mieux illustrer l'invention.

Une unité d'incinération est équipée du réacteur de dénitrification 201 dont le volume de catalyseur installé est V valant 40,8 $m^3$.

Le débit d'ammoniac 2 est mesuré en permanence et vaut 27 kg/heure (valeur exprimée en ammoniac $NH_3$ pur).

A un instant donné du fonctionnement normal des équipements, les conditions sont les suivantes :

- température des fumées traversant le réacteur 201 : 240°C,
- débit des fumées Q : 168 000 $Nm^3$/h, ce qui équivaut à un débit réel valant 316 000 $m^3$/h dans les conditions du réacteur 201, et
- valeur mesurée de la concentration en oxydes d'azote en aval du réacteur 201 : 50 mg/$Nm^3$.

En considérant que la stoechiométrie retenue de dénitrification est de 1 : 1, la concentration en oxyde d'azotes en amont du réacteur 201 peut être estimée par calcul à

$$NOxi = 50 + 27 \times \frac{46}{17} \times \frac{1000000}{168000} = 484 \text{ mg/Nm}^3.$$

En se fixant la concentration cible en oxydes d'azote en aval du réacteur 201 à la valeur de 50 mg/$Nm^3$, on calcule le besoin B = 316000 $\times$ $Ln(^{484}/_{50})$ = 717000 $m^3$/h.

On calcule alors l'activité requise du catalyseur K = 717000/40,8 = 17500 $h^{-1}$. Empiriquement, pour ce catalyseur, la relation suivante a été préétablie $K$ = -47260 + 6411$\times_e^{-0185H}$ + 66000$\times_e^{0.0022T}$ en $h^{-1}$. Il s'agit d'un modèle purement empirique, sans signification physique particulière, mais qui suffit au modèle de mise en oeuvre du présent exemple.

En reportant la valeur connue de 12% pour l'humidité H, on en déduit la valeur de 227°C pour la température de consigne qui est alors appliquée au dispositif de refroidissement 101.

**Revendications**

1. Procédé de contrôle d'un réacteur de dénitrification catalytique de fumées, dans lequel, de manière régulière et pendant que le réacteur (201) est alimenté avec des fumées à dénitrifier (1') et un réactif de dénitrification (2), on ajuste la température d'opération du réacteur en fonction de la teneur en humidité des fumées et d'une activité requise pour le catalyseur du réacteur, laquelle activité requise est déterminée à partir du volume préfixé du catalyseur et d'un besoin en dénitrification des fumées donné.

2. Procédé suivant la revendication 1, dans lequel, pour ajuster la température d'opération du réacteur (201), on :

   - calcule la valeur du besoin en dénitrification à partir de :

- la valeur connue (1001) du débit des fumées,
- la valeur (1002), mesurée ou estimée, de la concentration en oxydes d'azote dans les fumées (1') en amont du réacteur,
- la valeur cible (1003) de la concentration en oxydes d'azote dans les fumées (3) en aval du réacteur,

- calcule la valeur de l'activité requise à partir de la valeur calculée du besoin en dénitrification et de la valeur connue (1004) du volume du catalyseur,
- calcule la valeur d'une température de consigne à partir de la valeur calculée de l'activité requise et de la valeur mesurée (1005) de la teneur en humidité des fumées, et
- applique la température de consigne à des moyens (101) de refroidissement des fumées à dénitrifier.

3. Procédé suivant la revendication 2, dans lequel, pour estimer la valeur de la concentration en oxydes d'azote dans les fumées (1') en amont du réacteur (201), on la calcule à partir de :

- la valeur connue (1001) du débit des fumées,
- la valeur connue du débit du réactif de dénitrification (2) alimentant le réacteur, et
- la valeur mesurée de la concentration en oxydes d'azote dans les fumées (3) en aval du réacteur.

4. Procédé suivant l'une des revendications 2 ou 3,
dans lequel le besoin en dénitrification B est calculé selon la formule $B = Q \times Ln(NOxi/NOxo)$ où Q est la valeur (1001) du débit des fumées à dénitrifier, NOxi est la valeur (1002) de la concentration en oxydes d'azote dans les fumées en amont du réacteur, et NOxo est la valeur cible (1003) de la concentration en oxydes d'azote dans les fumées en aval du réacteur, et
dans lequel l'activité requise K est calculée selon la formule $K = B/V$ où V est la valeur (1004) du volume du catalyseur.

**Patentansprüche**

1. Verfahren zur Steuerung eines Reaktors zur katalytischen Denitrifikation von Rauchgasen, bei dem regelmäßig und während der Reaktor (201) mit zu denitrifizierenden Rauchgasen (1) und einem Denitrifikationsreagenz (2) versorgt wird, die Betriebstemperatur des Reaktors abhängig von dem Feuchtigkeitsgehalt der Rauchgase und einer für den Katalysator des Reaktors verlangten Aktivität eingestellt wird, wobei die verlangte Aktivität aus dem vorgegebenen Volumen des Katalysators und dem gegebenen Denitrifikationsbedarf der Rauchgase bestimmt wird.

2. Verfahren nach Anspruch 1, bei dem zur Einstellung der Betriebstemperatur des Reaktors (201):

- der Wert des Denitrifikationsbedarfs berechnet wird aus:

- dem bekannten Wert (1001) des Durchsatzes der Rauchgase,
- dem geschätzten oder gemessenen Wert (1002) der Konzentration an Stickoxiden in den Rauchgasen (1') stromaufwärts zum Reaktor,
- dem Zielwert (1003) der Konzentration an Stickoxiden in den Rauchgasen (3) stromabwärts zum Reaktor,

- der Wert der verlangten Aktivität aus dem berechneten Wert des Denitrifikationsbedarfs und des bekannten Werts (1004) des Volumens des Katalysators berechnet wird,
- der Wert einer Solltemperatur aus dem berechneten Wert der verlangten Aktivität und dem gemessenen Wert (1005) des Feuchtigkeitsgehalts der Rauchgase berechnet wird, und
- die Solltemperatur an Mitteln (101) zur Abkühlung der zu denitrifizierenden Rauchgase eingestellt wird.

3. Verfahren nach Anspruch 2, bei dem zur Schätzung des Wertes der Konzentration an Stickoxiden in den Rauchgasen (1') stromaufwärts zum Reaktor (201) dieser aus:

- dem bekannten Wert (1001) des Durchsatzes der Rauchgase,
- dem bekannten Wert des Durchsatzes des Denitrifikationsreagenz (2), das den Reaktor versorgt, und
- dem gemessenen Wert der Konzentration an Stickoxiden in den Rauchgasen (3) stromabwärts zum Reaktor,

berechnet wird.

**4.** Verfahren nach einem der Ansprüche 2 oder 3, bei dem der Denitrifikationsbedarf B gemäß der Formel B = Q x Ln(NOxi/NOxo) berechnet wird, wobei Q der Wert (1001) des Durchsatzes der zu denitrifizierenden Rauchgase ist, NOxi der Wert (1002) der Konzentration an Stickoxiden stromaufwärts zum Reaktor ist und NOxo der Zielwert (1003) der Konzentration an Stickoxiden der zu denitrifizierenden Rauchgase stromabwärts zum Reaktor ist und bei dem die verlangte Aktivität K gemäß der Formel K = B/V ist, wobei V der Wert (1004) des Volumens des Katalysators ist.

**Claims**

**1.** Method for controlling a reactor for catalytic denitrification of fumes, in which while the reactor (201) is being fed with fumes to denitrified (1') and a denitrification reagent (2), the operating temperature of the reactor is regularly adjusted as a function of the moisture content of the fumes and of a required activity for the catalyst of the reactor, wherein said required activity is determined from the preset volume of the catalyst and a given need for denitrification of the fumes.

**2.** Method according to claim 1, in which in order to adjust the operating temperature of the reactor (201):

• the value of the need for denitrification is calculated from:

o the known value (1001) of the flow rate of the fumes,
o the measured or estimated value (1002) of the concentration of nitrogen oxides in the fumes (1') upstream of the reactor,
o the target value (1003) of the concentration of nitrogen oxides in the fumes (3) downstream of the reactor,

• the value of the required activity is calculated from the calculated value of the need for denitrification and the known value (1004) of the volume of the catalyst,
• the value of a set-point temperature is calculated from the calculated value of the required activity and the measured value (1005) of the moisture content of the fumes, and
• the set-point temperature is applied to means (101) for cooling the fumes to be denitrified.

**3.** Method according to claim 2, in which in order to estimate the value of the concentration of nitrogen oxides in the fumes (1') upstream of the reactor (201), it is calculated from:

• the known value (1001) of the flow rate of the fumes,
• the known value of the flow rate of the denitrification reagent (2) feeding the reactor, and
• the measured value of the concentration of nitrogen oxides in the fumes (3) downstream of the reactor.

**4.** Method according to one of claims 2 or 3,
in which the need for denitrification B is calculated according to the formula B = Q x Ln(NOxi/NOxo), wherein Q is the value (1001) of the flow rate of the fumes to be denitrified, NOxi is the value (1002) of the concentration of nitrogen oxides in the fumes upstream of the reactor, and NOxo is the target value (1003) of the concentration of nitrogen oxides in the fumes downstream of the reactor, and in which the required activity K is calculated according to the formula K = B/V, where V is the value (1004) of the volume of the catalyst.

EP 2 792 401 B1

Fig.1

Fig.2

## RÉFÉRENCES CITÉES DANS LA DESCRIPTION

**Documents brevets cités dans la description**

- US 7824636 B

**Littérature non-brevet citée dans la description**

- **WILLI ; RODUIT.** *Chemical Engineering Science,* vol. 51 (11), 2897-2902